(19) **Europäisches Patentamt**
**European Patent Office**
**Office européen des brevets**

(11) **EP 4 546 856 A1**

(12) **EUROPEAN PATENT APPLICATION**
published in accordance with Art. 153(4) EPC

(43) Date of publication:
**30.04.2025 Bulletin 2025/18**

(21) Application number: **23876282.7**

(22) Date of filing: **13.07.2023**

(51) International Patent Classification (IPC):
**H04W 24/08** (2009.01)

(52) Cooperative Patent Classification (CPC):
**H04B 7/06; H04W 24/08; H04W 24/10**

(86) International application number:
**PCT/CN2023/107267**

(87) International publication number:
**WO 2024/078074 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.10.2022 CN 202211231252**

(71) Applicant: **ZTE Corporation**
**Shenzhen, Guangdong 518057 (CN)**

(72) Inventors:
- **LI, Yong**
  **Shenzhen, Guangdong 518057 (CN)**
- **LI, Lun**
  **Shenzhen, Guangdong 518057 (CN)**
- **ZHENG, Guozeng**
  **Shenzhen, Guangdong 518057 (CN)**
- **LU, Zhaohua**
  **Shenzhen, Guangdong 518057 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

(54) **CHANNEL STATE INFORMATION SENDING METHOD, CHANNEL STATE INFORMATION RECEIVING METHOD, DEVICE, AND STORAGE MEDIUM**

(57)    Provided are a channel state information processing method, a terminal, a base station, and a medium. The channel state information processing method comprises: performing grouping preprocessing on initial channel state information in a target dimension to obtain a plurality of pieces of first channel state information; encoding the plurality of pieces of first channel state information to generate second channel state information; and feeding back the second channel state information.

FIG. 2

**Description**

The present disclosure claims a priority to Chinese Patent Application No. 202211231252.6, filed on October 9, 2022, which is hereby incorporated by reference in its entirety.

TECHNICAL FIELD

The present disclosure relates to the technical field of communication, and in particular, to a channel state information sending method and receiving method, a device, and a storage medium.

BACKGROUND

At present, multi-antenna technology is one of the important means to improve the quality of wireless communication, and the multi-antenna technology plays an important role in standards such as long term evolution (Long Term Evolution, LTE), long term evolution-advanced (Long Term Evolution-advanced, LTE-A), and new radio access technology (New Radio Access Technology, NR).

SUMMARY

In one aspect, some embodiments of the present disclosure provide a channel state information sending method, where the method includes: measuring, by a terminal, a reference signal from a base station, to determine channel state information; generating, by the terminal, a bit sequence according to the channel state information; and sending, by the terminal, the bit sequence to the base station.

In another aspect, some embodiments of the present disclosure provide a channel state information receiving method, where the method includes: sending, by a base station, a reference signal; receiving, by the base station, a bit sequence from a terminal; and acquiring, by the base station, channel state information according to the bit sequence.

In yet another aspect, some embodiments of the present disclosure provide a terminal. The terminal includes:

a processing module, configured to measure a reference signal from a base station, to determine channel state information; and generate a bit sequence according to the channel state information; and
a communication module, configured to send the bit sequence to the base station.

In yet another aspect, some embodiments of the present disclosure provide a base station. The base station includes: a communication module, configured to send a reference signal, and receive a bit sequence from a terminal; and a processing module, configured to acquire channel state information according to the bit sequence.

In yet another aspect, some embodiments of the present disclosure provide a communication device. The communication device includes a processor, where when the processor executes a computer program, the above-mentioned channel state information sending method, or the above-mentioned channel state information receiving method is implemented.

In yet another aspect, some embodiments of the present disclosure provide a computer-readable storage medium. The computer-readable storage medium includes computer instructions, when the computer instructions are executed, the above-mentioned channel state information sending method, or the above-mentioned channel state information receiving method is implemented.

BRIEF DESCRIPTION OF THE DRAWINGS

FIG. 1 is a schematic diagram of an architecture of a communication system according to some embodiments.
FIG. 2 is a flowchart of a channel state information transmission method according to some embodiments.
FIG. 3 is a structural schematic diagram of a terminal according to some embodiments.
FIG. 4 is a structural schematic diagram of a base station according to some embodiments.
FIG. 5 is a structural schematic diagram of a communication device according to some embodiments.

DETAILED DESCRIPTION

In order to enable those skilled in the art to better understand the technical solutions in the embodiments of the present disclosure, the technical solutions in the embodiments of present disclosure will be described clearly and completely in conjunction with the accompanying drawings.

Obviously, the described embodiments are merely a part of embodiments of the present disclosure, but not all of embodiments of the present disclosure. All other embodiments obtained according to the embodiments of the present disclosure by those of ordinary skill in the art without paying any creative effort shall be included in the protection scope of the present disclosure. In the description of the present disclosure, unless otherwise specified, "/" means an "or" relationship, for example, "A/B" may represent A or B. The term "and/or" includes any and all combinations of one or more related listed items, e.g., only A, only B, only C, A and B, A and C, B and C, or A, B and C. In addition, "at least one" represents one or more, and "a plurality of" or variations thereof represents more than two.

Hereinafter, terms such as "first" and "second" are used for descriptive purposes only, and are not to be understood as indicating or implying the relative importance or implicitly indicating the number of indicated technical features.

It should be noted that in the present disclosure, wordings, such as "exemplarily" or "for example" and variations thereof are used to indicate examples, illustrations, or clarifications. Any embodiment or design solution described in the present disclosure as "exemplarily" or "for example" should not be illustrated as being more preferred or advantageous over other embodiments or design solutions. Specifically, the usage of wordings such as "exemplarily" or "for example" is intended to present relevant concepts in a concrete way.

In the embodiments of the present disclosure, "indication" and variations thereof may include direct indication and indirect indication. For example, taking first control information as an example below, the first control information directly carries information A itself or an index of the information A, so as to achieve a purpose of directly indicating the information A. For another example, the first control information carries information B associated with information A, thereby achieving the purpose of indirectly indicating information A while indicating information B.

The technical solutions provided in the embodiments of the present disclosure can be applied to various communication systems. For example, the technical solutions are applied to a new radio (New Radio, NR) communication system adopting 5G communication technology, a future evolution system, or a multi-communication convergence system, etc.

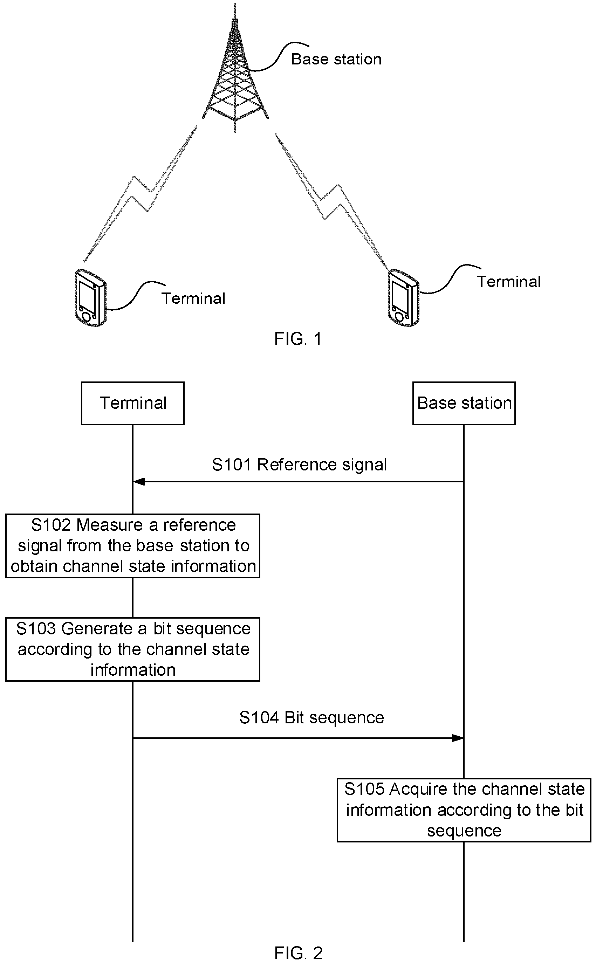

FIG. 1 is a schematic diagram of an architecture of a communication system according to some embodiments. As shown in FIG. 1, the communication system may include a base station and one or more terminals, and the base station may be in communication connection with the one or more terminals.

The base station is configured to implement functions such as resource scheduling, radio resource management and radio access control for the terminal, etc. The base station is, for example, a small base station, a wireless access point, a transmission receive point (Transmission Receive Point, TRP), a transmission point (Transmission Point, TP), or any of other access nodes.

The terminal is also be referred to as a terminal device, a user equipment (User Equipment, UE), a mobile station, a mobile terminal, etc. The terminal is, for example, a mobile phone, a tablet computer, a computer with a wireless transceiver function, a virtual reality terminal, an augmented reality terminal, a wireless terminal in industrial control, a wireless terminal in self driving, a wireless terminal in remote surgery, a wireless terminal in transportation safety, a wireless terminal in smart city, a wireless terminal in smart home, etc. A specific device form adopted by the terminal is not limited in the embodiments of the present disclosure.

It should be noted that FIG. 1 is merely an exemplary architecture diagram, and a number of device(s) and names of various devices shown in FIG. 1 are not limited. In addition to the devices shown in FIG. 1, the communication system may further include other devices, where the other devices are, for example, a core network device.

The application scenarios are not limited in the embodiments of the present disclosure. In addition, a system architecture and a service scenario described in the embodiments of the present disclosure are used for illustrating the technical solutions of the embodiments of the present disclosure more clearly, and do not constitute a limitation on the technical solutions of the embodiments of the present disclosure. Those of ordinary skill in the art should know that with the evolution of the network architecture and the emergence of new service scenarios, the technical solutions of the present disclosure are also applicable to similar technical problems.

FIG. 2 is a flowchart of a channel state information transmission method according to some embodiments. As shown in FIG. 2, the method includes S101-S105.

In S101, a base station sends a reference signal.

In some embodiments, the above-mentioned reference signal is a downlink reference signal.

For example, in an LTE system, a downlink reference signal for channel state information reporting includes a cell-specific reference signal (Cell-specific Reference Signal, CRS) and a channel-state information reference signal (Channel-state Information Reference Signal, CSI-RS). In a new radio communication system, a downlink reference signal for channel state information reporting includes a CSI-RS.

It should be understood that in the embodiments of the present disclosure, an implementation of the above-mentioned reference signal is not limited. For example, the above-mentioned reference signal may be other types of reference signals in a future network (such as a 6G network).

In some embodiments, a CSI-RS is carried by a channel state information reference signal resource (CSI-RS Resource), and the channel state information reference signal resource is composed of code division multiplexing groups (Code Division Multiplexing Groups, CDM groups). A CDM group is composed of wireless resource elements, and a CSI-RS of a group of CSI-RS ports is multiplexed on the CDM group through a manner of code division multiplexing.

In some embodiments, before the reference signal is sent, the base station may send configuration information to the terminal, so as to trigger the terminal to receive the reference signal and feed back a corresponding channel state information report. The configuration information may include first configuration information and second configuration information. The first configuration information is used to indicate configuration parameters of the reference signal. For example, the first configuration information is used to indicate one or more of the following information of the reference signal: a number of antenna ports for transmitting the reference signal and a transmission bandwidth for the reference signal. The second configuration information is used to indicate a content related to channel state information reporting. For example, the second configuration information is used to indicate one or more of the following information: a frequency domain position of channel state information that needs to be fed back, a frequency domain width of the channel state information that needs to be fed back, and contents included in the channel state information.

It should be noted that the base station sends the reference signal through an antenna port. Respective base station transmits reference signals by using respective numbers of antenna ports thereof, respectively, that is, numbers of antenna ports used by different base stations to transmit reference signals may be the same or may be different. For example, a number of antenna ports for transmitting a reference signal of base station 1 is 32, a number of antenna ports for transmitting a reference signal of base station 2 is 16, a number of antenna ports for transmitting a reference signal of base station 3 is 24, a number of antenna ports for transmitting a reference signal of base station 4 is 8, a number of antenna ports for transmitting a reference signal of base station 5 is 12, a number of antenna ports for transmitting a reference signal of base station 6 is 8, a number of antenna ports for transmitting a reference signal of base station 7 is 4, and a number of antenna ports for transmitting a reference signal of base station 8 is 2.

The terminal may communicate with different base stations due to a movement of a location of the terminal. For example, in a first time period, the terminal communicates with the base station 1; in a second time period, the terminal communicates with the base station 2. The terminal may also be connected to multiple base stations at the same time, and thus communicate with the multiple base stations at the same time. That is, the terminal may communicate with base stations that transmit reference signals through different numbers of antenna ports.

In S102, the terminal measures the reference signal from the base station, to obtain channel state information.

The channel state information is used to describe a channel attribute of a communication link between the terminal and the base station.

In some embodiments, the channel state information includes one or more of: a channel coefficient, a precoding matrix indicator (Precoding Matrix Indicator, PMI) and a channel quality indicator (Channel Quality Indicator, CQI).

Herein, a CQI may be used to indicate a quality of a channel. There are many kinds of reporting formats for CQI. For example, a reporting format for CQI is:

(1) wideband CQI reporting, that is, a channel quality is reported for a channel state information reporting band (CSI reporting band), where the channel quality corresponds to the entire channel state information reporting band.
(2) sub-band CQI reporting, that is, channel qualities are given respectively in a unit of sub-band (which is also referred to as a channel quality indicator sub-band, or a CQI sub-band) for the channel state information reporting band (CSI reporting band), where a channel quality corresponds to a sub-band, that is, a channel quality is reported for each sub-band of the channel state information reporting band.

It should be noted that the above sub-band is a frequency domain unit, defined as N consecutive resource blocks (Resource Block, RB), N is referred to as a size of a CQI sub-band (also referred to as a CQI sub-band size, or a sub-band size), and N is a positive integer.

A bandwidth block (i.e., a Band Width Part (BWP)) includes a sub-band, and a channel state information reporting band is defined as a subset of the sub-bands of the bandwidth block. The channel state information reporting band is a band where the channel state information on the bandwidth block needs to be reported.

In some embodiments, the channel quality may be determined according to a strength of the reference signal received by the terminal, and the channel quality may also be determined according to a signal to interference plus noise ratio of the received reference signal. On a channel state information reporting band, if the channel quality does not change greatly, reporting the CQI in a manner of the wideband CQI reporting may reduce the resource overhead for CQI reporting; if there is a significant difference on the channel quality in frequency domain, reporting the CQI in a manner of sub-band CQI reporting may increase the accuracy of CQI reporting.

PMI is used to indicate a precoding matrix applied to a base station antenna. There are many kinds of reporting formats for PMI. For example, a reporting format for PMI is:

(1) wideband PMI reporting, that is, a PMI is reported for a channel state information reporting band, and the PMI corresponds to the entire channel state information reporting band.

(2) sub-band PMI reporting, that is, a PMI is reported for each sub-band of the channel state information reporting band, or a component of the PMI is reported for each sub-band of the channel state information reporting band. For example, a PMI is composed of an $X_1$ and an $X_2$. A reporting format for the PMI may be an $X_1$ being reported for the entire band, and an $X_2$ being reported for each sub-band. The reporting format for the PMI may also be an $X_1$ and one $X_2$ for each sub-band.

(3) the reported PMI indicates R precoding matrices for each sub-band. In the sense of frequency-domain granularity for feeding back precoding matrix, R may also be understood as a number of precoding matrix sub-band(s) included in each sub-band, R is a positive integer.

In the embodiments of the present disclosure, the contents of the channel state information is related to the number of antenna ports for the reference signal. Therefore, the channel state information may be marked according to the number of antenna ports for the reference signal. For example, the number of antenna ports for the reference signal is M, and corresponding channel state information may be referred to as channel state information with a number of antenna ports being M.

A channel coefficient may be illustrated in the form of a channel coefficient matrix, where a dimension of the channel coefficient matrix is a transmitting antenna and the other dimension of the channel coefficient matrix is a receiving antenna. A channel coefficient may be marked according to a number of transmitting antennas. For example, the number of transmitting antennas is M, the channel coefficient may be referred to as a channel coefficient with a number of antenna ports being M.

Pre-code may be described in the form of a precoding matrix, where a dimension of the precoding matrix is a transmitting antenna. Pre-code may be marked according to a number of transmitting antennas. For example, the number of transmitting antennas for precoding is M, and a pre-code may be referred to as a pre-code with a number of antenna ports being M; or a number of transmitting antennas for a precoding matrix is M, and precoding matrix may be referred to as a precoding matrix with a number of antenna ports being M.

The above-mentioned transmitting antenna may also be referred to as an antenna port for the reference signal, or a transmitting antenna port for the reference signal, which is not limited in the present disclosure.

In S103, the terminal generates a bit sequence according to the channel state information.

In some embodiments, the terminal generates the bit sequence according to a target encoding mode and the channel state information.

It should be noted that since the channel state information contains a large amount of data, directly reporting the channel state information may result in a large uplink resource overhead. Therefore, by encoding the channel state information with a large amount of data into a bit sequence with a smaller amount of data and then reporting the bit sequence, the uplink resource overhead for reporting the channel state information may be reduced.

In some embodiments of the present disclosure, the terminal separately encodes each parameter included in the channel state information. For example, the channel state information includes a channel coefficient and pre-code, and the terminal may encode the channel coefficient as a corresponding first bit sequence, and encode the pre-code as a corresponding second bit sequence.

In some other embodiments of the present disclosure, the terminal jointly encodes multiple parameters in the channel state information. For example, the terminal jointly encodes the channel coefficient and the channel quality indicator into a bit sequence. For another example, the terminal jointly encodes the pre-code and the channel quality indicator into a bit sequence.

In some embodiments, an encoding mode may be implemented by adopting an encoding model or an encoder. The encoding model may be constructed according to a neural network, and the encoder may be understood as a hardware implementation of the encoding model. An input of the encoding model (or a target encoder) may be channel state information with a specific number of antenna ports, and the encoding model (or the target encoder) encodes the channel state information to output a bit sequence.

In some embodiments, a data format of the channel state information is related to a number of antenna ports for the reference signal. In order to improve the encoding efficiency of the encoding mode, an encoding mode is used to process channel state information of a kind of data format, that is, an encoding mode is used to process channel state information with a specific number of antennas. For example, a first encoding mode is used to process channel state information with a number of antenna ports being 16, and a second encoding mode is used to process channel state information with a number of antenna ports being 8.

It should be noted that the encoding mode in the embodiments of the present disclosure may be marked according to a number of antenna ports corresponding to the channel state information that may be processed. For example, the above-mentioned first encoding mode may be referred to as an encoding mode with a number of antenna ports being 16, and the above-mentioned second encoding mode may be referred to as an encoding mode with a number of antenna ports being 8.

In some embodiments, the terminal may be configured with N encoding modes, where N is a maximum number of types of numbers of antenna ports. In this way, no matter how many the number of antenna ports for the reference signal is, the terminal may process the channel state information by using an encoding mode that matches a number of antenna ports for the reference signal. For example, numbers of antenna ports for the reference signal that may be used by the base station in the communication system includes 2, 4, 8, 16 and 32, then the terminal is configured with an encoding mode with a number of antenna ports being 2, an encoding mode with a number of antenna ports being 4, an encoding mode with a number of antenna ports being 8, an encoding mode with a number of antenna ports being 16 and an encoding mode with a number of antenna ports being 32. Currently, the number of antenna ports for the reference signal sent from the base station is 16, and then, the terminal encodes the channel state information by using an encoding mode with a number of antenna ports being 16.

In some other embodiments, the terminal may only be configured with P encoding modes, where P is smaller than N. For example, numbers of antenna ports for the reference signal that may be adopted by the base station includes 2, 4, 8, 16 and 32. However, the terminal is only configured with an encoding mode with a number of antenna ports being 8. In this way, a number of encoding modes configured for the terminal is less than the maximum number of types of the numbers of antenna ports, which can reduce the implementation complexity of the terminal, so as to reduce the manufacturing cost of the terminal.

In some embodiments, the terminal may send first information to the base station, and correspondingly, the base station receives the first information from the terminal. The first information is used to indicate at least one encoding mode configured for the terminal, and the target encoding mode is one of the at least one encoding mode. In this way, when the reference signal is sent, the base station may give a priority to a situation where the number of antenna ports for the reference signal is the same as the number of antenna ports for an encoding mode configured for the terminal, so as to reduce system complexity.

The first information includes numbers of antenna ports for respective encoding modes in the at least one encoding mode. For example, the terminal is configured with a first encoding mode and a second encoding mode, and the first information includes a number 16 of antenna ports corresponding to the first encoding mode, and a number 8 of antenna ports corresponding to the second encoding mode.

It should be noted that the first information may be carried in capability information of the terminal, that is, the terminal may enable the base station to learn the encoding mode configured for the terminal based on a reporting process for the capability information.

In some embodiments, when the terminal is configured with multiple encoding modes, the terminal may also indicate to the base station the target encoding mode to be used this time. In this way, the base station may adopt a target decoding mode that matches the target encoding mode, to restore the bit sequence into corresponding channel state information.

It should be understood that the number of antenna ports for the target encoding mode and the number of antenna ports for the reference signal may be the same or different.

In some embodiments, in a case where the number of antenna ports for the target encoding mode is the same as the number of antenna ports for the reference signal, the terminal generating the bit sequence according to the target encoding mode and the channel state information mentioned above can be implemented as follows: the terminal encoding the channel state information according to the target encoding mode, to obtain the corresponding bit sequence.

In some other embodiments, in a case where the number of antenna ports for the target encoding mode is different from the number of antenna ports for the reference signal, the terminal generating the bit sequence according to the target encoding mode and the channel state information mentioned above can be implemented as follows: the terminal processing the channel state information according to a first mapping mode of which an antenna port for the reference signal is mapped to an antenna port for the target encoding mode, to obtain processed channel state information. Afterwards, the terminal encodes the processed channel state information according to the target encoding mode, to obtain the corresponding bit sequence.

It should be understood that when the number of antenna ports for the target encoding mode is not equal to the number of antenna ports for the reference signal, a data format of the channel state information measured by the terminal (hereinafter referred to as first data format) does not conform to a data format required by the target encoding mode (hereinafter referred to as the second data format). Therefore, by processing the channel state information, conversion of the data format of the channel state information can be implemented, so that a data format of the processed channel state information can conform to the second data format.

For example, a channel coefficient measured by the terminal is implemented in the form of an 8*4 matrix, and the target encoding mode can process data in the form of a 16*4 matrix. The terminal needs to convert the data format of the 8*4 channel coefficient matrix into a 16*4 channel coefficient matrix.

For another example, a channel coefficient measured by the terminal is implemented in the form of a 16*4 matrix, and the target encoding mode can process data in the form of an 8*4 matrix. The terminal needs to convert the data format of the 16*4 channel coefficient matrix into an 8*4 channel coefficient matrix.

In some embodiments, in a case where the number of the antenna ports for the target encoding mode is less than the number of the antenna ports for the reference signal, the first mapping mode includes one or more of the following modes.

Mode 1: an antenna port for the reference signal is mapped to an antenna port for the target encoding mode.

For example, in a case where the number of antenna ports for the target encoding mode is 16 and the number of antenna ports for the reference signal is 8, Tables 1 to 8 show multiple mapping modes according to Mode 1. As shown in Table 1 and Table 2, antenna ports for the reference signal are mapped to front ports of the antenna ports for the target encoding modes. As shown in Table 3 and Table 4, the antenna ports for the reference signal are mapped to rear ports of the antenna ports for the target encoding mode. As shown in Table 5 and Table 6, the antenna ports for the reference signal are mapped to middle ports of the antenna ports for the target encoding mode. As shown in Table 7 and Table 8, the antenna ports for the reference signal are mapped to the antenna ports for the target encoding mode in a comb-like form.

Table 1

| Serial number of an antenna port for the reference signal | 0 | 1 | 2 | 3 | 4 | 5 | 6 | 7 | | | | | | | |
|---|---|---|---|---|---|---|---|---|---|---|---|---|---|---|---|
| Serial number of an antenna port for the target encoding mode | 0 | 1 | 2 | 3 | 4 | 5 | 6 | 7 | 8 | 9 | 10 | 11 | 12 | 13 | 14 | 15 |

Table 2

| Serial number of an antenna port for the reference signal | 0 | 2 | 4 | 6 | 1 | 3 | 5 | 7 | | | | | | | |
|---|---|---|---|---|---|---|---|---|---|---|---|---|---|---|---|
| Serial number of an antenna port for the target encoding mode | 0 | 1 | 2 | 3 | 4 | 5 | 6 | 7 | 8 | 9 | 10 | 11 | 12 | 13 | 14 | 15 |

Table 3

| Serial number of an antenna port for the reference signal | | | | | | | | | 0 | 1 | 2 | 3 | 4 | 5 | 6 | 7 |
|---|---|---|---|---|---|---|---|---|---|---|---|---|---|---|---|---|
| Serial number of an antenna port for the target encoding mode | 0 | 1 | 2 | 3 | 4 | 5 | 6 | 7 | 8 | 9 | 10 | 11 | 12 | 13 | 14 | 15 |

Table 4

| Serial number of an antenna port for the reference signal | | | | | | | | | 0 | 2 | 4 | 6 | 1 | 3 | 5 | 7 |
|---|---|---|---|---|---|---|---|---|---|---|---|---|---|---|---|---|
| Serial number of an antenna port for the target encoding mode | 0 | 1 | 2 | 3 | 4 | 5 | 6 | 7 | 8 | 9 | 10 | 11 | 12 | 13 | 14 | 15 |

Table 5

| Serial number of an antenna port for the reference signal | | | | 0 | 1 | 2 | 3 | 4 | 5 | 6 | 7 | | | | |
|---|---|---|---|---|---|---|---|---|---|---|---|---|---|---|---|
| Serial number of an antenna port for the target encoding mode | 0 | 1 | 2 | 3 | 4 | 5 | 6 | 7 | 8 | 9 | 10 | 11 | 12 | 13 | 14 | 15 |

Table 6

| Serial number of an antenna port for the reference signal | | | | | 0 | 2 | 4 | 6 | 1 | 3 | 5 | 7 | | | | |
|---|---|---|---|---|---|---|---|---|---|---|---|---|---|---|---|---|
| Serial number of an antenna port for the target encoding mode | 0 | 1 | 2 | 3 | 4 | 5 | 6 | 7 | 8 | 9 | 10 | 11 | 12 | 13 | 14 | 15 |

Table 7

| Serial number of an antenna port for the reference signal | 0 | | 1 | | 2 | | 3 | | 4 | | 5 | | 6 | | 7 | |
|---|---|---|---|---|---|---|---|---|---|---|---|---|---|---|---|---|
| Serial number of an antenna port for the target encoding mode | 0 | 1 | 2 | 3 | 4 | 5 | 6 | 7 | 8 | 9 | 10 | 11 | 12 | 13 | 14 | 15 |

Table 8

| Serial number of an antenna port for the reference signal | | 0 | | 1 | | 2 | | 3 | | 4 | | 5 | | 6 | | 7 |
|---|---|---|---|---|---|---|---|---|---|---|---|---|---|---|---|---|
| Serial number of an antenna port for the target encoding mode | 0 | 1 | 2 | 3 | 4 | 5 | 6 | 7 | 8 | 9 | 10 | 11 | 12 | 13 | 14 | 15 |

In the embodiments of the present disclosure, according to the mapping mode of Mode 1, the terminal maps data corresponding to each antenna port in the measured channel state information to data corresponding to an antenna port in the channel state information in the second data format.

For example, a channel coefficient matrix in the measured channel state information is:

$$\begin{vmatrix} a_{00} & a_{01} & a_{02} & a_{03} & a_{04} & a_{05} & a_{06} & a_{07} \\ a_{10} & a_{11} & a_{12} & a_{13} & a_{14} & a_{15} & a_{16} & a_{17} \\ a_{20} & a_{21} & a_{22} & a_{23} & a_{24} & a_{25} & a_{26} & a_{27} \\ a_{30} & a_{31} & a_{32} & a_{33} & a_{34} & a_{35} & a_{36} & a_{37} \\ a_{40} & a_{41} & a_{42} & a_{43} & a_{44} & a_{45} & a_{46} & a_{47} \\ a_{50} & a_{51} & a_{52} & a_{53} & a_{54} & a_{55} & a_{56} & a_{57} \\ a_{60} & a_{61} & a_{62} & a_{63} & a_{64} & a_{65} & a_{66} & a_{67} \\ a_{70} & a_{71} & a_{72} & a_{73} & a_{74} & a_{75} & a_{76} & a_{77} \end{vmatrix}$$

A column of elements in the above channel coefficient matrix is data corresponding to an antenna port for the reference signal, and a row of elements is data corresponding to a receiving antenna of the terminal.

According to the mapping mode shown in Table 1, the above channel coefficient matrix is processed, and the processed channel coefficient matrix is:

$$\begin{vmatrix} a_{00} & a_{01} & a_{02} & a_{03} & a_{04} & a_{05} & a_{06} & a_{07} & 0 & 0 & 0 & 0 & 0 & 0 & 0 & 0 \\ a_{10} & a_{11} & a_{12} & a_{13} & a_{14} & a_{15} & a_{16} & a_{17} & 0 & 0 & 0 & 0 & 0 & 0 & 0 & 0 \\ a_{20} & a_{21} & a_{22} & a_{23} & a_{24} & a_{25} & a_{26} & a_{27} & 0 & 0 & 0 & 0 & 0 & 0 & 0 & 0 \\ a_{30} & a_{31} & a_{32} & a_{33} & a_{34} & a_{35} & a_{36} & a_{37} & 0 & 0 & 0 & 0 & 0 & 0 & 0 & 0 \\ a_{40} & a_{41} & a_{42} & a_{43} & a_{44} & a_{45} & a_{46} & a_{47} & 0 & 0 & 0 & 0 & 0 & 0 & 0 & 0 \\ a_{50} & a_{51} & a_{52} & a_{53} & a_{54} & a_{55} & a_{56} & a_{57} & 0 & 0 & 0 & 0 & 0 & 0 & 0 & 0 \\ a_{60} & a_{61} & a_{62} & a_{63} & a_{64} & a_{65} & a_{66} & a_{67} & 0 & 0 & 0 & 0 & 0 & 0 & 0 & 0 \\ a_{70} & a_{71} & a_{72} & a_{73} & a_{74} & a_{75} & a_{76} & a_{77} & 0 & 0 & 0 & 0 & 0 & 0 & 0 & 0 \end{vmatrix}$$

Mode 2: an antenna port for the reference signal is repeatedly mapped to different antenna ports for the target encoding mode.

# EP 4 546 856 A1

For example, in a case where the number of antenna ports for the target encoding mode is 16 and the number of antenna ports for the reference signal is 8, as shown in Table 9 or Table 10, each antenna port for the reference signal may be repeatedly mapped to different antenna ports for the target encoding mode.

Table 9

| Serial number of an antenna port for the reference signal | 0 | 1 | 2 | 3 | 4 | 5 | 6 | 7 | 0 | 1 | 2 | 3 | 4 | 5 | 6 | 7 |
|---|---|---|---|---|---|---|---|---|---|---|---|---|---|---|---|---|
| Serial number of an antenna port for the target encoding mode | 0 | 1 | 2 | 3 | 4 | 5 | 6 | 7 | 8 | 9 | 10 | 11 | 12 | 13 | 14 | 15 |

Table 10

| Serial number of an antenna port for the reference signal | 0 | 0 | 1 | 1 | 2 | 2 | 3 | 3 | 4 | 4 | 5 | 5 | 6 | 6 | 7 | 7 |
|---|---|---|---|---|---|---|---|---|---|---|---|---|---|---|---|---|
| Serial number of an antenna port for the target encoding mode | 0 | 1 | 2 | 3 | 4 | 5 | 6 | 7 | 8 | 9 | 10 | 11 | 12 | 13 | 14 | 15 |

For example, in a case where the number of antenna ports for the target encoding mode is 16 and the number of antenna ports for the reference signal is 12, as shown in Table 11 or Table 12, some antenna ports for the reference signal may be repeatedly mapped to different antenna ports for the target encoding mode.

Table 11

| Serial number of an antenna port for the reference signal | 0 | 1 | 2 | 3 | 4 | 5 | 6 | 7 | 8 | 9 | 10 | 11 | 0 | 1 | 2 | 3 |
|---|---|---|---|---|---|---|---|---|---|---|---|---|---|---|---|---|
| Serial number of an antenna port for the target encoding mode | 0 | 1 | 2 | 3 | 4 | 5 | 6 | 7 | 8 | 9 | 10 | 11 | 12 | 13 | 14 | 15 |

Table 12

| Serial number of an antenna port for the reference signal | 0 | 1 | 2 | 3 | 4 | 5 | 6 | 7 | 8 | 9 | 10 | 11 | 8 | 9 | 10 | 11 |
|---|---|---|---|---|---|---|---|---|---|---|---|---|---|---|---|---|
| Serial number of an antenna port for the target encoding mode | 0 | 1 | 2 | 3 | 4 | 5 | 6 | 7 | 8 | 9 | 10 | 11 | 12 | 13 | 14 | 15 |

In the embodiments of the present disclosure, according to the mapping mode of Mode 2, the terminal repeatedly maps data corresponding to the antenna port in the measured channel state information to data corresponding to different antenna ports in the channel state information in the second data format.

For example, a channel coefficient matrix in the measured channel state information is:

9

$$\begin{vmatrix} a_{00} & a_{01} & a_{02} & a_{03} & a_{04} & a_{05} & a_{06} & a_{07} \\ a_{10} & a_{11} & a_{12} & a_{13} & a_{14} & a_{15} & a_{16} & a_{17} \\ a_{20} & a_{21} & a_{22} & a_{23} & a_{24} & a_{25} & a_{26} & a_{27} \\ a_{30} & a_{31} & a_{32} & a_{33} & a_{34} & a_{35} & a_{36} & a_{37} \\ a_{40} & a_{41} & a_{42} & a_{43} & a_{44} & a_{45} & a_{46} & a_{47} \\ a_{50} & a_{51} & a_{52} & a_{53} & a_{54} & a_{55} & a_{56} & a_{57} \\ a_{60} & a_{61} & a_{62} & a_{63} & a_{64} & a_{65} & a_{66} & a_{67} \\ a_{70} & a_{71} & a_{72} & a_{73} & a_{74} & a_{75} & a_{76} & a_{77} \end{vmatrix}$$

According to the mapping mode shown in Table 9, the above channel coefficient matrix is processed, and the processed channel coefficient matrix is:

$$\begin{vmatrix} a_{00} & a_{01} & a_{02} & a_{03} & a_{04} & a_{05} & a_{06} & a_{07} & a_{00} & a_{01} & a_{02} & a_{03} & a_{04} & a_{05} & a_{06} & a_{07} \\ a_{10} & a_{11} & a_{12} & a_{13} & a_{14} & a_{15} & a_{16} & a_{17} & a_{10} & a_{11} & a_{12} & a_{13} & a_{14} & a_{15} & a_{16} & a_{17} \\ a_{20} & a_{21} & a_{22} & a_{23} & a_{24} & a_{25} & a_{26} & a_{27} & a_{20} & a_{21} & a_{22} & a_{23} & a_{24} & a_{25} & a_{26} & a_{27} \\ a_{30} & a_{31} & a_{32} & a_{33} & a_{34} & a_{35} & a_{36} & a_{37} & a_{30} & a_{31} & a_{32} & a_{33} & a_{34} & a_{35} & a_{36} & a_{37} \\ a_{40} & a_{41} & a_{42} & a_{43} & a_{44} & a_{45} & a_{46} & a_{47} & a_{40} & a_{41} & a_{42} & a_{43} & a_{44} & a_{45} & a_{46} & a_{47} \\ a_{50} & a_{51} & a_{52} & a_{53} & a_{54} & a_{55} & a_{56} & a_{57} & a_{50} & a_{51} & a_{52} & a_{53} & a_{54} & a_{55} & a_{56} & a_{57} \\ a_{60} & a_{61} & a_{62} & a_{63} & a_{64} & a_{65} & a_{66} & a_{67} & a_{60} & a_{61} & a_{62} & a_{63} & a_{64} & a_{65} & a_{66} & a_{67} \\ a_{70} & a_{71} & a_{72} & a_{73} & a_{74} & a_{75} & a_{76} & a_{77} & a_{70} & a_{71} & a_{72} & a_{73} & a_{74} & a_{75} & a_{76} & a_{77} \end{vmatrix}$$

Mode 3: antenna ports for the reference signal in multiple dimensions in the channel state information are mapped to an antenna port in a dimension for the conversion mode.

For example, Tables 13 to 15 show multiple mapping modes according to Mode 3.

Table 13

| Serial number of an antenna port for the reference signal | Antenna port for the reference signal in 0-th dimension in channel state information | | | | | | | | Antenna port for the reference signal in 1st dimension in channel state information | | | | | | | |
|---|---|---|---|---|---|---|---|---|---|---|---|---|---|---|---|---|
| | 0 | 1 | 2 | 3 | 4 | 5 | 6 | 7 | 0 | 1 | 2 | 3 | 4 | 5 | 6 | 7 |
| Serial number of an antenna port for the target encoding mode | 0 | 1 | 2 | 3 | 4 | 5 | 6 | 7 | 8 | 9 | 10 | 11 | 12 | 13 | 14 | 15 |

Table 14

| Serial number of an antenna port for the reference signal | Antenna port for the reference signal corresponding to 0-th receiving antenna for a channel coefficient | | | | | | | | Antenna port for the reference signal corresponding to 1st receiving antenna for channel a coefficient | | | | | | | |
|---|---|---|---|---|---|---|---|---|---|---|---|---|---|---|---|---|
| | 0 | 1 | 2 | 3 | 4 | 5 | 6 | 7 | 0 | 1 | 2 | 3 | 4 | 5 | 6 | 7 |
| Serial number of an antenna port for the target encoding mode | 0 | 1 | 2 | 3 | 4 | 5 | 6 | 7 | 8 | 9 | 10 | 11 | 12 | 13 | 14 | 15 |

Table 15

| Serial number of an antenna port for the reference signal | Antenna port for the reference signal corresponding to 0-th layer of pre-code | | | | | | | | Antenna port for the reference signal corresponding to 1st layer of pre-code | | | | | | | |
|---|---|---|---|---|---|---|---|---|---|---|---|---|---|---|---|---|
| | 0 | 1 | 2 | 3 | 4 | 5 | 6 | 7 | 0 | 1 | 2 | 3 | 4 | 5 | 6 | 7 |
| Serial number of an antenna port for the target encoding mode | 0 | 1 | 2 | 3 | 4 | 5 | 6 | 7 | 8 | 9 | 10 | 11 | 12 | 13 | 14 | 15 |

According to Mode 3, the terminal maps data in multiple dimensions in the measured channel state information to data in a dimension in the channel state information in the second data format.

For example, a channel coefficient matrix in the measured channel state information is:

$$\begin{vmatrix} a_{00} & a_{01} & a_{02} & a_{03} & a_{04} & a_{05} & a_{06} & a_{07} \\ a_{10} & a_{11} & a_{12} & a_{13} & a_{14} & a_{15} & a_{16} & a_{17} \end{vmatrix}$$

According to the mapping mode shown in Table 14, the above channel coefficient matrix is processed, and the processed channel coefficient matrix is:

$$\begin{vmatrix} a_{00} & a_{01} & a_{02} & a_{03} & a_{04} & a_{05} & a_{06} & a_{07} & a_{10} & a_{11} & a_{12} & a_{13} & a_{14} & a_{15} & a_{16} & a_{17} \end{vmatrix}$$

In some embodiments, in a case where the number of antenna ports for the target encoding mode is less than the number of antenna ports for the reference signal, the first mapping mode may be: for each group of antenna ports in multiple groups of antenna ports for the reference signal, each antenna port in the group of antenna ports in the reference signal being mapped to a corresponding antenna port for the target encoding mode.

In some embodiments of the present disclosure, the antenna ports for the reference signal may be grouped in an order of serial numbers. For example, the antenna ports for the reference signal may be grouped according to a grouping mode shown in Table 16 or Table 17.

Table 16

|  | Serial number of an antenna port for the reference signal | | | | | | | |
| --- | --- | --- | --- | --- | --- | --- | --- | --- |
| 0-th group | 0 | 1 | 2 | 3 | 4 | 5 | 6 | 7 |
| 1st group | 8 | 9 | 10 | 11 | 12 | 13 | 14 | 15 |

Table 17

|  | Serial number of an antenna port for the reference signal | | | |
| --- | --- | --- | --- | --- |
| 0-th group | 0 | 1 | 2 | 3 |
| 1st group | 4 | 5 | 6 | 7 |
| 2nd group | 8 | 9 | 10 | 11 |
| 3rd group | 12 | 13 | 14 | 15 |

In some other embodiments of the present disclosure, the antenna ports for the reference signal may be grouped in a comb-like mode. For example, the antenna ports for the reference signal may be grouped according to a grouping mode shown in Table 18 or Table 19.

Table 18

|  | Serial number of an antenna port for the reference signal | | | | | | | |
| --- | --- | --- | --- | --- | --- | --- | --- | --- |
| 0-th group | 0 | 2 | 4 | 6 | 8 | 10 | 12 | 14 |
| 1st group | 1 | 3 | 5 | 7 | 9 | 11 | 13 | 15 |

Table 19

|  | Serial number of an antenna port for the reference signal | | | |
| --- | --- | --- | --- | --- |
| 0-th group | 0 | 4 | 8 | 12 |
| 1st group | 1 | 5 | 9 | 13 |
| 2nd group | 2 | 6 | 10 | 14 |
| 3rd group | 4 | 7 | 11 | 15 |

In some embodiments, in a case where the number of antenna ports for the target encoding mode is less than the number of antenna ports for the reference signal, the terminal maps data corresponding to each group of antenna ports in the channel state information to channel state information in a second data format.

For example, a channel coefficient matrix in the measured channel state information is:

$$\begin{vmatrix} a_{00} & a_{01} & a_{02} & a_{03} & a_{04} & a_{05} & a_{06} & a_{07} \\ a_{10} & a_{11} & a_{12} & a_{13} & a_{14} & a_{15} & a_{16} & a_{17} \\ a_{20} & a_{21} & a_{22} & a_{23} & a_{24} & a_{25} & a_{26} & a_{27} \\ a_{30} & a_{31} & a_{32} & a_{33} & a_{34} & a_{35} & a_{36} & a_{37} \\ a_{40} & a_{41} & a_{42} & a_{43} & a_{44} & a_{45} & a_{46} & a_{47} \\ a_{50} & a_{51} & a_{52} & a_{53} & a_{54} & a_{55} & a_{56} & a_{57} \\ a_{60} & a_{61} & a_{62} & a_{63} & a_{64} & a_{65} & a_{66} & a_{67} \\ a_{70} & a_{71} & a_{72} & a_{73} & a_{74} & a_{75} & a_{76} & a_{77} \end{vmatrix}$$

Assuming that the channel coefficient matrix in the second data format is a 4*8 matrix, the terminal may map data corresponding to antenna ports 0-3 in the measured channel coefficient matrix to a 4*8 matrix, so as to obtain a channel coefficient matrix 1 in the second data format, and map data corresponding to antenna ports 4-7 in the measured channel coefficient matrix to another 4*8 matrix, so as to obtain a channel coefficient matrix 2 in the second data format.

The channel coefficient matrix 1 is shown below:

$$\begin{vmatrix} a_{00} & a_{01} & a_{02} & a_{03} \\ a_{10} & a_{11} & a_{12} & a_{13} \\ a_{20} & a_{21} & a_{22} & a_{23} \\ a_{30} & a_{31} & a_{32} & a_{33} \\ a_{40} & a_{41} & a_{42} & a_{43} \\ a_{50} & a_{51} & a_{52} & a_{53} \\ a_{60} & a_{61} & a_{62} & a_{63} \\ a_{70} & a_{71} & a_{72} & a_{73} \end{vmatrix}$$

The channel coefficient matrix 2 is shown below:

$$\begin{vmatrix} a_{04} & a_{05} & a_{06} & a_{07} \\ a_{14} & a_{15} & a_{16} & a_{17} \\ a_{24} & a_{25} & a_{26} & a_{27} \\ a_{34} & a_{35} & a_{36} & a_{37} \\ a_{44} & a_{45} & a_{46} & a_{47} \\ a_{54} & a_{55} & a_{56} & a_{57} \\ a_{64} & a_{65} & a_{66} & a_{67} \\ a_{74} & a_{75} & a_{76} & a_{77} \end{vmatrix}$$

After multiple pieces of channel state information in the second data format is determined, the terminal may encode the multiple pieces of channel state information in the second data format according to the target encoding mode, so as to obtain a bit sequence corresponding to channel state information in the second data format. The terminal obtains a bit sequence corresponding to the channel state information in the first data format according to a bit sequence corresponding to the multiple pieces of channel state information in the second data format.

In some embodiments, the terminal may send a phase relationship among the multiple groups of antenna ports to the base station. In this way, the base station may improve the accuracy of the acquired channel state information based on the phase relationship among the multiple groups of antenna ports.

In some embodiments, the terminal may negotiate with the base station about the first mapping mode. A negotiation mode includes one or more of the following:

sending, by the terminal, second information to the base station, where the second information is used to suggest at least one first mapping mode; and/or
receiving, by the terminal, third information from the base station, where the third information is used to indicate a selected first mapping mode.

In some embodiments, the third information includes a first partial content and a second partial content, the first partial content is used to indicate at least one recommended first mapping mode, and the second partial content is used to select a first mapping mode from the at least one recommended first mapping mode.

In some embodiments, the first partial content and the second partial content of the third information may be transmitted together or may be transmitted independently. For example, the base station may send the first partial content of the third information through a radio resource control (Radio Resource Control, RRC) signaling, and then send the second partial content of the third information through a downlink control information (Downlink Control Information, DCI) signaling. A sending mode and a sending occasion for the third information are not limited in the embodiments of the present disclosure.

In some embodiments, the terminal may further send fourth information to the base station, where the fourth information is used to indicate a second mapping mode of which an antenna port for a target decoding mode corresponding to the target encoding mode is mapped to an antenna port for the reference signal. It should be understood that the second mapping mode indicated by the fourth information matches the first mapping mode adopted by the terminal.

The fourth information and the bit sequence may be sent together. For example, both the fourth information and the bit sequence may be carried in a channel state information measurement report, which can save the resource overhead.

Optionally, the fourth information may be sent before the bit sequence is sent. In this way, the base station may prepare in advance based on the fourth information, so as to save time for acquiring the channel state information.

In S104, the terminal sends the bit sequence to the base station, and the base station receives the bit sequence from the terminal.

In some embodiments of the present disclosure, the terminal sends a channel state information measurement report to the base station, and correspondingly, the base station receives the channel state information measurement report from the terminal. The channel state information measurement report includes the bit sequence.

In S105, the base station acquires the channel state information according to the bit sequence.

In some embodiments of the present disclosure, the base station acquires the channel state information according to a target decoding mode and the bit sequence.

It should be understood that the target decoding mode adopted by the base station and the target encoding mode adopted by the terminal match each other. That is, input data of the target encoding mode is output data of the target decoding mode, and output data of the target encoding mode is input data of the target decoding mode.

In some embodiments, the target decoding mode may be implemented by using a decoding model or a decoder. The decoding model may be constructed based on a neural network, and the decoder may be understood as a hardware implementation of the decoding model. An input of the decoding model (or decoder) may be a bit sequence, and the decoding model (or decoder) decodes the bit sequence to output channel state information with a specific number of antenna ports.

The decoding mode in the embodiments of the present disclosure may be marked by the number of antenna ports for the output channel state information. For example, the first decoding mode outputs channel state information with a number of antenna ports being 16, and the first decoding mode may be referred to as a decoding mode with a number of antenna ports being 16. The second decoding mode outputs the channel state information with a number of antenna ports being 8. The second decoding mode may be referred to as a decoding mode with a number of antenna ports being 8.

In some embodiments, in a case where the number of antenna ports for the target encoding mode is the same as the number of antenna ports for the reference signal, the base station acquiring the channel state information according to the target decoding mode and the bit sequence mentioned above can be implemented as: the base station decoding the bit sequence according to the target decoding mode, to obtain the channel state information.

In some other embodiments, in a case where the number of antenna ports for the target encoding mode is different from the number of antenna ports for the reference signal, the base station acquiring the channel state information according to the target decoding mode and the bit sequence mentioned above can be implemented as: the base station decoding the bit sequence according to the target decoding mode corresponding to the target encoding mode, to obtain decoding information. The base station processing the decoding information according to a second mapping mode of which an antenna port for the target decoding mode is mapped to an antenna port for the reference signal, to obtain the channel state information. Herein, the decoding information is the processed channel state information mentioned in the above step 103 (or referred to as the channel state information in the second data format).

The second mapping mode corresponds to the first mapping mode. The second mapping mode may refer to the description for the first mapping mode, which will not be repeated in the present disclosure.

It should be understood that in a case where the number of antenna ports for the target encoding mode is not equal to the number of antenna ports for the reference signal, since the target decoding mode matches the target encoding mode, the decoding information output by the target decoding mode is the channel state information in the second data format, and the channel state information in the first data format (i.e., the channel state information measured by the terminal) may not be directly output. Therefore, the base station needs to perform data format conversion processing on the decoding information output by the target decoding mode, so as to obtain the channel state information in the first data format.

In some embodiments, the base station may determine a data transmission strategy based on the channel state information fed back by the terminal, so as to improve the efficiency of data transmission from the base station to the terminal.

In the embodiments of the present disclosure, the terminal reduces the resource when reporting the channel state information by feeding back a bit sequence with a smaller amount of data instead of directly feeding back the channel state information with a larger amount of data.

In the embodiments of the present disclosure, encoding may also be understood as conversion, compression, or the like; decoding may also be understood as conversion, decompression, or the like, which are not limited in the present disclosure.

It can be understood that, in order to implement the above functions, the terminal and the base station include corresponding hardware structures and/or software modules for implementing various functions. Those skilled in the art should easily realize that the present disclosure can be implemented in the form of hardware or a combination of hardware and computer software in combination with algorithms and steps described in the embodiments disclosed in the present disclosure. Whether a certain function is implemented by hardware or by computer software driving hardware depends on the specific application and design constraint conditions of the technical solutions. Professional technicians may use different methods to implement the described functions for each specific application, but such implementation should not be considered beyond the scope of the present disclosure.

The embodiments of the present disclosure may divide the terminal and the base station into functional modules according to the above method embodiments. For example, division of each functional module may be performed corresponding to each function, or two or more functions may be integrated into one functional module. The integrated module may be implemented in the form of hardware, or may be implemented in the form of software. It should be noted that the division of the modules in the embodiments of the present disclosure is illustrated, which is only a logical functional division, and there may be other division manners in an actual implementation. The following is illustrated by taking a division of each functional module corresponding to each function as an example.

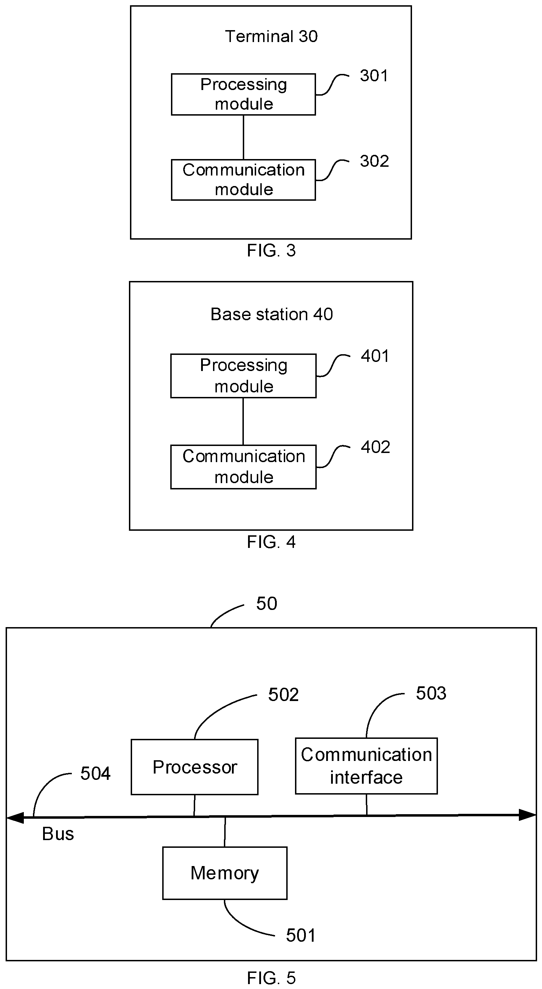

FIG. 3 is a structural schematic diagram of a terminal according to some embodiments. As shown in FIG. 3, the terminal 30 includes a processing module 301 and a communication module 302.

The processing module 301 is configured to measure a reference signal from a base station, to determine channel state information; and generate a bit sequence according to the channel state information.

The communication module 302 is configured to send the bit sequence to the base station.

In some embodiments, the processing module 301 is configured to generate the bit sequence according to a target encoding mode and the channel state information.

In some embodiments, the processing module 301 is configured to, in a case where a number of antenna ports for the target encoding mode is different from a number of antenna ports for the reference signal, process the channel state information according to a first mapping mode of which an antenna port for the reference signal is mapped to an antenna port for the target encoding mode, to obtain processed channel state information; and encode the processed channel state information according to the target encoding mode, to obtain the bit sequence.

In some embodiments, in a case where the number of the antenna ports for the reference signal is less than the number of the antenna ports for the target encoding mode, the first mapping mode includes one or more of the following modes:

an antenna port for the reference signal being mapped to an antenna port for the target encoding mode;
an antenna port for the reference signal being repeatedly mapped to different antenna ports for the target encoding mode; or
antenna ports for the reference signal in multiple dimensions in the channel state information being mapped to an antenna port in a dimension for the target encoding mode.

In some embodiments, in a case where the number of the antenna ports for the reference signal is greater than the number of the antenna ports for the target encoding mode, the first mapping mode includes:
for each group of antenna ports in multiple groups of antenna ports for the reference signal, each antenna port in the group of antenna ports in the reference signal being mapped to a corresponding antenna port for the target encoding mode. In some embodiments, the communication module 302 is further configured to send a phase relationship among the multiple groups of antenna ports to the base station.

In some embodiments, the communication module 302 is further configured to send first information to the base station, where the first information is used to indicate at least one encoding mode configured for the terminal, and the target encoding mode is one of the at least one encoding mode.

In some embodiments, the communication module 302 is further configured to negotiate with the base station about the first mapping mode.

In some embodiments, the communication module 302 is further configured to send second information to the base station, where the second information is used to suggest at least one first mapping mode; and/or receive third information from the base station, where the third information is used to indicate a selected first mapping mode.

In some embodiments, the communication module 302 is further configured to send fourth information to the base station, where the fourth information is used to indicate a second mapping mode of which an antenna port for a target decoding mode corresponding to the target encoding mode is mapped to an antenna port for the reference signal.

FIG. 4 is a structural schematic diagram of a base station according to some embodiments. As shown in FIG. 4, the base station 40 includes a processing module 401 and a communication module 402.

The communication module 402 is configured to send a reference signal; and receive a bit sequence from a terminal.

The processing module 401 is configured to acquire channel state information according to the bit sequence.

In some embodiments, the processing module 401 is configured to acquire the channel state information according to a target decoding mode and the bit sequence.

In some embodiments, the processing module 401 is configured to, in a case where a number of antenna ports for a target encoding mode adopted by the terminal is different from a number of antenna ports for the reference signal, decode the bit sequence according to the target decoding mode, to obtain decoding information; and process the decoding information according to a second mapping mode of which an antenna port for the target decoding mode is mapped to an antenna port for the reference signal, to obtain the channel state information.

In some embodiments, the communication module 402 is further configured to receive first information from the terminal, where the first information is used to indicate at least one encoding mode configured by the terminal, and the target encoding mode is one of the at least one encoding mode.

In some embodiments, the first information includes numbers of antenna ports for respective encoding modes in the at least one encoding mode.

In some embodiments, the first information is carried in capability information of the terminal.

In some embodiments, the communication module 402 is further configured to negotiate with the terminal about a first mapping mode of which an antenna port for the reference signal is mapped to an antenna port for the target encoding mode.

In some embodiments, the communication module 402 is further configured to receive second information sent from the terminal, where the second information is used to suggest at least one first mapping mode; and/or send third information to the terminal, where the third information is used to indicate a selected first mapping mode.

In some embodiments, the third information includes a first partial content and a second partial content, the first partial content is used to indicate at least one recommended first mapping mode, and the second partial content is used to select a first mapping mode from the at least one recommended first mapping mode. **In** some embodiments, in a case where the number of the antenna ports for the reference signal is less than the number of the antenna ports for the target encoding mode, the first mapping mode includes one or more of the following modes:

an antenna port for the reference signal being mapped to an antenna port for the target encoding mode;
an antenna port for the reference signal being repeatedly mapped to different antenna ports for the target encoding mode; or
antenna ports for the reference signal in multiple dimensions in the channel state information being mapped to an antenna port in a dimension for the target encoding mode.

In some embodiments, in a case where the number of the antenna ports for the reference signal is greater than the number of the antenna ports for the target encoding mode, the first mapping mode includes:
for each group of antenna ports in multiple groups of antenna ports for the reference signal, each antenna port in the group of antenna ports in the reference signal being mapped to a corresponding antenna port for the target encoding mode. In some embodiments, the communication module 402 is further configured to receive a phase relationship among the multiple groups of antenna ports from the terminal.

In some embodiments, the communication module 402 is further configured to receive fourth information from the terminal, where the fourth information is used to indicate the second mapping mode.

FIG. 5 is a structural schematic diagram of a communication device according to some embodiments. In a case where the functions of the above-mentioned integrated modules are implemented in the form of hardware, the structures of the base station and the terminal provided in the embodiments of the present disclosure may refer to the structure of the communication device 50 shown in FIG. 5. As shown in FIG. 5, the communication device 50 includes a processor 502 and a bus 504. The communication device may further include a memory 501, and the communication device may further include a communication interface 503.

The processor 502 may implement or perform various exemplary logical blocks, modules and circuits described in combination with the present disclosure. The processor 502 may be one of a central processor, a general purpose processor, a digital signal processor, an application specific integrated circuit, a field-programmable gate array, or other programmable logic components, transistor logic components, hardware components, or any combination thereof, which can implement or perform the various exemplary logical blocks, modules and circuits described in combination with the present disclosure. The processor 502 may also be a combination implementing computing functions, for example, a combination of one or more microprocessors, or a combination of a digital signal processor (Digital Signal Processor, DSP) and a microprocessor.

The communication interface 503 is configured to connect with other apparatuses through a communication network. The communication network may be Ethernet, a wireless access network, a wireless local area network (Wireless Local Area Networks, WLAN), etc.

The memory 501 may be, but is not limited to, a read-only memory (Read-only Memory, ROM) or any other type of static memory capable of storing static information and instructions, may be a random access memory (Random Access Memory, RAM) or any other type of dynamic memory capable of storing information and instructions, or may further be an electrically erasable programmable read-only memory (Electrically Erasable Programmable Read-only Memory, EEPROM), a magnetic disk storage medium or other magnetic disk storage apparatuses, or any other media capable of being used to carry or store desired program codes and capable of being accessed by a computer, where the desired program codes have instructions or are in the form of data structure.

In some embodiments, the memory 501 may exist independently from the processor 502, and the memory 501 may be connected to the processor 502 through the bus 504 for storing instructions or program codes. When the processor 502 invokes and executes the instructions or program codes stored in the memory 501, the processor 502 may implement the methods in the embodiments of the present disclosure.

In some other embodiments, the memory 501 may be integrated with the processor 502.

The bus 504 may be an extended industry standard architecture (Extended Industry Standard Architecture, EISA) bus, or the like. The bus 504 may be classified as an address bus, a data bus, a control bus, or the like. For ease of representation, only one bold line is used in FIG. 5 for representing the bus 504, but it does not mean that there is only one bus or one type of bus.

Some embodiments of the present disclosure provide a computer-readable storage medium (for example, a non-transitory computer-readable storage medium), where the computer-readable storage medium has stored computer program instructions, and the computer program instructions, upon being executed by a computer, enable the computer to perform the method as described in any one of the above embodiments.

For example, the above-mentioned computer-readable storage medium includes, but is not limited to, a magnetic storage component (e.g., a hard disk, a floppy disk or a magnetic tape), an optical disk (e.g., a compact disk (Compact Disk, CD), or a digital versatile disk (Digital Versatile Disk, DVD)), a smart card and a flash memory component (e.g., an erasable programmable read-only memory (Erasable Programmable Read-Only Memory, EPROM), a card, a stick or a key driver). The various computer-readable storage media described in the present disclosure may represent one or more apparatuses and/or other machine-readable storage media for storing information. The term "machine-readable storage media" may include, but not limited to, a wireless channel and various other media capable of storing, containing, and/or carrying instructions and/or data.

Some embodiments of the present disclosure provide a computer program product including instructions, where when the computer program product is run on a computer, the computer is enabled to perform the method as described in any one of the above embodiments.

A person skilled in the art will understand that the disclosed scope of the present disclosure is not limited to the specific embodiments described above, and certain elements of the embodiments may be modified and replaced without departing from the spirit of the present disclosure. The scope of the present disclosure is limited by the appended claims.

**Claims**

1. A channel state information sending method, comprising:

   measuring, by a terminal, a reference signal from a base station, to determine channel state information;
   generating, by the terminal, a bit sequence according to the channel state information; and
   sending, by the terminal, the bit sequence to the base station.

2. The method according to claim 1, wherein the generating, by the terminal, the bit sequence according to the channel state information comprises:
   generating, by the terminal, the bit sequence according to a target encoding mode and the channel state information.

3. The method according to claim 2, wherein the generating, by the terminal, the bit sequence according to the target encoding mode and the channel state information comprises:

in a case where a number of antenna ports for the target encoding mode is different from a number of antenna ports for the reference signal, processing, by the terminal, the channel state information according to a first mapping mode of which an antenna port for the reference signal is mapped to an antenna port for the target encoding mode, to obtain processed channel state information; and

encoding, by the terminal, the processed channel state information according to the target encoding mode, to obtain the bit sequence.

4. The method according to claim 3, in a case where the number of the antenna ports for the reference signal is less than the number of the antenna ports for the target encoding mode, the first mapping mode comprises one or more of:

an antenna port for the reference signal being mapped to an antenna port for the target encoding mode;

an antenna port for the reference signal being repeatedly mapped to different antenna ports for the target encoding mode; or

antenna ports for the reference signal in multiple dimensions in the channel state information being mapped to an antenna port in a dimension for the target encoding mode.

5. The method according to claim 3, wherein in a case where the number of the antenna ports for the reference signal is greater than the number of the antenna ports for the target encoding mode, the first mapping mode comprises:

for each group of antenna ports in multiple groups of antenna ports for the reference signal, each antenna port in the group of antenna ports in the reference signal being mapped to a corresponding antenna port for the target encoding mode.

6. The method according to claim 5, wherein the method further comprises:

sending, by the terminal to the base station, a phase relationship among the multiple groups of antenna ports.

7. The method according to any one of claims 2 to 6, wherein the method further comprises:

sending, by the terminal, first information to the base station, wherein the first information is used to indicate at least one encoding mode configured for the terminal, and the target encoding mode is one of the at least one encoding mode.

8. The method according to claim 7, wherein the first information includes numbers of antenna ports for respective encoding modes in the at least one encoding mode.

9. The method according to claim 7, wherein the first information is carried in capability information of the terminal.

10. The method according to any one of claims 3 to 6, wherein the method further comprises:

negotiating, by the terminal with the base station, about the first mapping mode.

11. The method according to claim 10, wherein the negotiating, by the terminal with the base station, about the first mapping mode comprises one or more of:

sending, by the terminal, second information to the base station, wherein the second information is used to suggest at least one first mapping mode; or

receiving, by the terminal, third information from the base station, wherein the third information is used to indicate a selected first mapping mode.

12. The method according to claim 11, wherein the third information includes a first partial content and a second partial content, the first partial content is used to indicate at least one recommended first mapping mode, and the second partial content is used to select a first mapping mode from the at least one recommended first mapping mode.

13. The method according to any one of claims 3 to 6, wherein the method further comprises:

sending, by the terminal, fourth information to the base station, wherein the fourth information is used to indicate a second mapping mode of which an antenna port for a target decoding mode corresponding to the target encoding mode is mapped to an antenna port for the reference signal.

14. A channel state information receiving method, comprising:

sending, by a base station, a reference signal;
receiving, by the base station, a bit sequence from a terminal; and
acquiring, by the base station, channel state information according to the bit sequence.

15. The method according to claim 14, wherein the acquiring, by the base station, the channel state information according to the bit sequence comprises:
acquiring, by the base station, the channel state information according to a target decoding mode and the bit sequence.

16. The method according to claim 15, wherein the acquiring, by the base station, the channel state information according to the target decoding mode and the bit sequence comprises:

in a case where a number of antenna ports for a target encoding mode adopted by the terminal is different from a number of antenna ports for the reference signal, decoding, by the base station, the bit sequence according to the target decoding mode, to obtain decoding information; and
processing, by the base station, the decoding information according to a second mapping mode of which an antenna port for the target decoding mode is mapped to an antenna port for the reference signal, to obtain the channel state information.

17. The method according to claim 16, wherein the method further comprises:
receiving, by the base station, first information from the terminal, wherein the first information is used to indicate at least one encoding mode configured for the terminal, and the target encoding mode is one of the at least one encoding mode.

18. The method according to claim 17, wherein the first information includes numbers of antenna ports for respective encoding modes in the at least one encoding mode.

19. The method according to claim 17, wherein the first information is carried in capability information of the terminal.

20. The method according to claim 16, wherein the method further comprises:
negotiating, by the base station with the terminal, about a first mapping mode of which an antenna port for the reference signal is mapped to an antenna port for the target encoding mode.

21. The method according to claim 20, wherein the negotiating, by the base station with the terminal, about the first mapping mode of which the antenna port for the reference signal is mapped to the antenna port for the target encoding mode comprises one or more of:

receiving, by the base station, second information sent from the terminal, wherein the second information is used to suggest at least one first mapping mode; or
sending, by the base station, third information to the terminal, wherein the third information is used to indicate a selected first mapping mode.

22. The method according to claim 21, wherein the third information includes a first partial content and a second partial content, the first partial content is used to indicate at least one recommended first mapping mode, and the second partial content is used to select a first mapping mode from the at least one recommended first mapping mode.

23. The method according to any one of claims 20 to 22, wherein in a case where the number of the antenna ports for the reference signal is less than the number of the antenna ports for the target encoding mode, the first mapping mode includes one or more of:

an antenna port for the reference signal being mapped to an antenna port for the target encoding mode;
an antenna port for the reference signal being repeatedly mapped to different antenna ports for the target encoding mode; or
antenna ports for the reference signal in multiple dimensions in the channel state information being mapped to an antenna port in a dimension for the target encoding mode.

24. The method according to any one of claims 20 to 22, wherein in a case where the number of the antenna ports for the reference signal is greater than the number of the antenna ports for the target encoding mode, the first mapping mode includes:
for each group of antenna ports in multiple groups of antenna ports for the reference signal, each antenna port in the group of antenna ports in the reference signal being mapped to a corresponding antenna port for the target encoding mode.

25. The method according to claim 24, wherein the method further comprises:
receiving, by the base station, a phase relationship among the multiple groups of antenna ports from the terminal.

26. The method according to any one of claims 16 to 22, wherein the method further comprises:
receiving, by the base station, fourth information from the terminal, wherein the fourth information is used to indicate the second mapping mode.

27. A communication device, comprising a processor, wherein in a case where the processor executes a computer program, the channel state information sending method according to any one of claims 1 to 13, or the channel state information receiving method according to any one of claims 14 to 26 is implemented.

28. A computer-readable storage medium, comprising computer instructions, wherein in a case where the computer instructions are executed, the channel state information sending method according to any one of claims 1 to 13, or the channel state information receiving method according to any one of claims 14 to 26 is implemented.

Base station

Terminal

Terminal

FIG. 1

| Terminal | | Base station |
| --- | --- | --- |

S101 Reference signal

S102 Measure a reference signal from the base station to obtain channel state information

S103 Generate a bit sequence according to the channel state information

S104 Bit sequence

S105 Acquire the channel state information according to the bit sequence

FIG. 2

Terminal 30

Processing module — 301

Communication module — 302

FIG. 3

Base station 40

Processing module — 401

Communication module — 402

FIG. 4

— 50

— 502       — 503

— 504    Processor    Communication interface

Bus

Memory

— 501

FIG. 5

## INTERNATIONAL SEARCH REPORT

| | International application No. |
|---|---|
| | **PCT/CN2023/107267** |

**A. CLASSIFICATION OF SUBJECT MATTER**

H04W 24/08(2009.01)i

According to International Patent Classification (IPC) or to both national classification and IPC

**B. FIELDS SEARCHED**

Minimum documentation searched (classification system followed by classification symbols)

IPC: H04W，H04L，H04B

Documentation searched other than minimum documentation to the extent that such documents are included in the fields searched

Electronic data base consulted during the international search (name of data base and, where practicable, search terms used)

CNTXT, VCN, ENTXT, DWPI, CNKI, 3GPP: 参考信号, 信道状态, 比特序列, 编码, 映射, 端口, reference w signal, CSI, bit, sequence, coding, map+, port, CQI, PMI

**C. DOCUMENTS CONSIDERED TO BE RELEVANT**

| Category* | Citation of document, with indication, where appropriate, of the relevant passages | Relevant to claim No. |
|---|---|---|
| X | CN 110034852 A (HUAWEI TECHNOLOGIES CO., LTD.) 19 July 2019 (2019-07-19) description, paragraphs [0002], [0183]-[0188], [0310], and [0740]-[0758] | 1-28 |
| X | CN 110535504 A (ZTE CORP.) 03 December 2019 (2019-12-03) description, paragraphs [0048]-[0367] | 1-28 |
| A | CN 103516464 A (ZTE CORP.) 15 January 2014 (2014-01-15) entire document | 1-28 |
| A | US 2006018389 A1 (TELEFONAKTIEBOLAGET LM ERICSSON (PUBL)) 26 January 2006 (2006-01-26) entire document | 1-28 |
| A | QUALCOMM INC. "R1-1702534, Remaining details on hybrid CSI" *3GPP TSG-RAN WG1 #88*, 17 February 2017 (2017-02-17), entire document | 1-28 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **19 September 2023** | **27 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/107267**

| Patent document cited in search report | | | Publication date (day/month/year) | Patent family member(s) | | | Publication date (day/month/year) |
|---|---|---|---|---|---|---|---|
| CN | 110034852 | A | 19 July 2019 | None | | | |
| CN | 110535504 | A | 03 December 2019 | KR | 20210142730 | A | 25 November 2021 |
| | | | | US | 2022030584 | A1 | 27 January 2022 |
| | | | | EP | 3952124 | A1 | 09 February 2022 |
| | | | | AU | 2020251598 | A1 | 28 October 2021 |
| | | | | WO | 2020199954 | A1 | 08 October 2020 |
| | | | | JP | 2022527944 | A | 07 June 2022 |
| CN | 103516464 | A | 15 January 2014 | None | | | |
| US | 2006018389 | A1 | 26 January 2006 | WO | 2006009510 | A1 | 26 January 2006 |
| | | | | EP | 1774690 | A1 | 18 April 2007 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211231252